# EUROPÄISCHE PATENTSCHRIFT

(11) **EP 0 570 773 B1**
(45) Veröffentlichungstag und Bekanntmachung des Hinweises auf die Patenterteilung: **23.12.1998**
(21) Anmeldenummer: 93107397.7
(22) Anmeldetag: 07.05.1993
(51) Int. Cl.: C08F 265/04, C08F 279/02, C08L 55/02, C08L 51/06

(54) **Teilchenförmiges Pfropfpolymerisat**
Graft polymer in particles
Polymère greffé particulaire

(30) Priorität: 19.05.1992 DE 4216549
(43) Veröffentlichungstag der Anmeldung: 24.11.1993
(73) Patentinhaber: BASF Aktiengesellschaft, 67063 Ludwigshafen (DE)
(72) Erfinder: Fischer, Wolfgang, Dr., W-6700 Ludwigshafen (DE); Guentherberg, Norbert, Dr., W-6720 Speyer (DE); Niessner, Norbert, Dr., W-6701 Friedelsheim (DE); Ruppmich, Karl, W-6700 Ludwigshafen (DE); Seitz, Friedrich, Dr., W-6701 Friedelsheim (DE)

(56) Entgegenhaltungen:
- EP-A- 0 164 048
- EP-A- 0 450 511
- US-A- 3 632 683

## Beschreibung

Die Erfindung betrifft teilchenförmige Pfropfpolymerisate, die als Weichkomponente für matte thermoplastische Formmassen mit verbesserter Zähigkeit geeignet sind.

Es ist bekannt (DE-A 34 21 353), gleichzeitig sowohl saure als auch basische Monomere in die Hülle eines Pfropfkautschuks einzubauen. In DE 34 05 938 wird der Einsatz von Pfropfpolymerisaten mit sauren Funktionen in Thermoplasten mit basischen Funktionen beschrieben. DE 40 11 163 beschreibt die Verwendung eines sauren Monomeren im Pfropfkern bei gleichzeitigem Einsatz einer Base in der Pfropfhülle. Die Erzeugung matter Formmassen, unter Verwendung der vorstehenden Vorschläge und Angaben ist jedoch nicht befriedigend gelungen. Es wurden nun Pfropfcopolymerisate gefunden, die den damit hergestellten Formmassen eine verbesserte Zähigkeit verleihen, durch Schaffung einer Kautschukkomponente, die basische Monomere im Grundkautschuk und saure Monomere im Pfropfkautschuk enthält.

Erfindungsgegenstand ist ein teilchenförmiges Pfropfpolymerisat aus
- A:: einer Pfropfgrundlage A auf der Grundlage eines Acrylkautschuks A1 aus
A11: 75 bis 99,8 Gew.-% mindestens eines Alkylacrylats All mit 1 - 8 C-Atomen im Alkylrest
A12: 0,1 bis 5 Gew.-% mindestens eines polyfunktionellen, vernetzend wirkenden Monomeren A12
A13: 0,1 bis 20 Gew.-% mindestens eines eine oder mehrere basische Gruppen enthaltenden Monomeren A13 oder auf der Grundlage eines Dienkautschuks A2 aus
A21: mindestens 50 Gew.-% eines oder mehrerer Diene A21
A22: bis zu 50 Gew.-% mindestens eines copolymerisierbaren ethylenisch ungesättigten Monomeren A22
A23: 0,1 bis 15 Gew.-% mindestens eines eine oder mehrere basische Gruppen enthaltenden Monomeren A23 und
B: einer Pfropfhülle B aus
B1: 40 bis 89,9 Gew.-% mindestens eines vinylaromatischen Monomeren B1
B2: 10 bis 49,9 Gew.-% mindestens eines polaren, copolymerisierbaren, ethylenisch ungesättigten Monomeren B2
B3: 0,1 bis 20 Gew.-% mindestens eines eine oder mehrere saure Gruppen enthaltenden Monomeren B3.

Erfindungsgegenstand ist weiterhin eine thermoplastische Formmasse aus im wesentlichen 1 bis 50 Gew.-% des vorstehend beschriebenen teilchenförmigen Pfropfpolymerisats und 50 bis 99 Gew.-% mindestens eines Polymeren mit einer Glasübergangstemperatur von mehr als 25°C als Matrix sowie ungeordneten Mengen an üblichen Zusatz- und Hilfsstoffen.

Gegenstand der Erfindung sind somit teilchenförmige Pfropfpolymerisate der vorstehenden, herstellungsbedingten Zusammensetzung sowie unter Verwendung solcher Pfropfpolymerisate hergestellte thermoplastische Formmassen. Über die erfindungsgemäßen teilchenförmigen Pfropfcopolymerisate, ihre Bestandteile und ihre Herstellung ist im einzelnen das folgende zu sagen:

Die teilchenförmigen Pfropfpolymerisate werden aus einer Pfropfgrundlage (Kautschuk) A und einer Pfropfhülle B in an sich bekannter Weise erhalten. Als Kautschuk A dient entweder ein vernetztes Acrylsäureester-Polymerisat Al oder ein Diencopolymerisate A2 mit einer Glasübergangstemperatur unter 0°C, bevorzugt unter -20°C.

Als Monomere All kommen Acrylsäureester mit 1 bis 8 Kohlenstoffatomen, mindestens teilweise solche mit 4 bis 8 Kohlenstoffatomen, im Alkylrest in Betracht. Als geeignet seien besonders Acrylsäure-n-butylester und Acrylsäureethylhexylester genannt. Die Acrylsäureester können jeweils allein oder auch in Mischung miteinander eingesetzt werden.

Zur Erzielung guter mechanischer Eigenschaften hat es sich als notwendig erwiesen, daß das als Pfropfgrundlage verwendete Acrylsäureester-Polymerisat vernetzt ist. Hierzu wird die Polymerisation der Acrylsäureester in Gegenwart von 0,1 bis 5 Gew.-%, bezogen auf das Gesamtgewicht der bei der Herstellung der Pfropfgrundlage eingesetzten Monomeren, eines copolymerisierbaren, polyfunktionellen, die Vernetzung bewirkenden Monomeren A12 durchgeführt. Es eignen sich Monomere, die mindestens zwei zur Copolymerisation befähigte ethylenische Doppelbindungen enthalten, die nicht in 1,3-Stellung konjugiert sind. Beispiele sind Divinylbenzol, Diallylmaleat, Diallylfumarat, Diallylphthalat, Allyl-methacrylat, Triallylcyanurat oder Triallylisocyanurat. Als besonders günstiges Vernetzungsmonomeres hat sich der Acrylsäureester des Tricyclodecenylalkohols erwiesen (vgl. DE-PS 12 60 135).

Als Monomere A21 kommen in Frage Butadien, Isopren und deren Derivate und ferner Hexadien und Chloropren.

Zur Verbesserung der Anbindung der Pfropfhülle an die Pfropfgrundlage enthält das zur Herstellung der Pfropfgrundlage verwendete Monomerengemisch des weiteren noch 0,1 bis 20 Gew.-% eines oder mehrerer copolymerisierbare Monomere, die eine oder mehrere basische Gruppen enthalten (A13) bzw. (A23). Bevorzugte Monomere enthalten im Molekül eine tertiäre Aminogruppe. Hier seien als Beispiele genannt: Dimethylaminoethyl (meth)acrylat, Morpholinmethacrylat, N-Vinylimidazol, p-Dimethylaminostyrol, N-Vinylcarbazol, 3-Vinylpyridin, 4-Vinylpyridin, sowie deren Gemische. Besonders bevorzugte Monomere sind Ester der Acrylsäure oder Methacrylsäure mit aliphatischen Alkoholen, die im Alkylrest eine tertiäre Aminogruppe enthalten.

Zur Herstellung des Pfropfmischpolymerisats kann man nach der in der DE-PS 12 60 135 beschriebenen Methode vorgehen. Hierzu wird zunächst die Pfropfgrundlage A hergestellt; wenn die Pfropfgrundlage ein Acrylatkautschuk sein soll, wird der oder die Acrylsäureester All, das polyfunktionelle Monomere A12 und das erfindungsgemäße basische Monomere A13 in wäßriger Emulsion bei 20 bis 100°C, bevorzugt zwischen 50 und 80°C polymerisiert. Es können die üblichen Emulgatoren wie die Alkalisalze von Alkyl- oder Alkylarylsulfonsäuren, Alkylsulfate, Fettalkoholsulfonate, Salze höherer Fettsäuren mit 10 bis 30 Kohlenstoffatomen oder Harzseifen verwendet werden. Vorzugsweise nimmt man die Natriumsalze von Alkylsulfonaten oder von Fettsäuren mit 10 bis 18 Kohlenstoffatomen. Es ist günstig, die Emulgatoren in einer Menge von 0,5 bis 5 Gew.-%, insbesondere 1 bis 2 Gew.-%, bezogen auf das Gesamtgewicht der für die Herstellung der Pfropfgrundlage verwendeten Monomeren, einzusetzen. Im allgemeinen wird bei einem Wasser/Monomer-Verhältnis von 2:1 bis 0,7:1 gearbeitet. Als Polymerisationsinitiatoren dienen insbesondere die gebräuchlichen Persulfate, wie z.B. Kaliumperoxodisulfat, es sind jedoch auch Redoxsysteme geeignet. Die Menge an Initiatoren (z.B. 0,1 bis 1 Gew.-%, bezogen auf das Gesamtgewicht der Monomeren) richtet sich in bekannter Weise nach dem gewünschten Molgewicht.

Als Polymerisationshilfsstoffe können die üblichen Puffersubstanzen, durch welche pH-Werte von vorzugsweise 6 bis 9 eingestellt werden, z.B. Natriumbicarbonat und Natriumpyrophosphat, sowie bis 3 Gew.-% eines Molekulargewichtsreglers, wie Mercaptan, Terpinol oder dimeres alpha-Methylstyrol verwendet werden.

Die genauen Polymerisationsbedingungen, insbesondere Art, Dosierung und Menge des Emulgators werden innerhalb der oben angegebenen Bereiche so bestimmt, daß der erhaltene Latex des vernetzten Acrylsäureester-Polymerisats einen d₅₀-Wert im Bereich von etwa 30 bis 1000 nm, bevorzugt im Bereich von 50 bis 800 nm besitzt.

Wenn der Pfropfkern ein Dienkautschuk sein soll, wird zweckmäßig wie folgt verfahren:

Das Elastomer, die Pfropfgrundlage A wird hergestellt, indem A21 allein, gegebenenfalls zusammen mit den weiteren Comonomeren A22 und A23 in wäßriger Emulsions in an sich bekannter Weise bei Temperaturen von 20 bis 100°C, vorzugsweise von 50 bis 80°C, polymerisiert werden. Es können die üblichen Emulgatoren, wie Alkalisalze von Alkyl- oder Alkylarylsulfonsäuren, Alkylsulfate, Fettalkoholsulfonate, Salze höherer Fettsäuren mit 10 bis 30 Kohlenstoffatomen oder Harzseifen, verwendet werden. Vorzugsweise nimmt man die Natrium- oder Kaliumsalze von Alkylsulfonaten oder Fettsäuren mit 10 bis 18 Kohlenstoffatomen. Es ist günstig, die Emulgatoren in Mengen von 0,5 bis 5 Gew.-%, insbesondere von 0,5 bis 2 Gew.-%, bezogen auf die bei der Herstellung der Pfropfgrundlage A eingesetzten Monomeren, einzusetzen. Im allgemeinen wird bei einem Wasser- und Monomeren-Verhältnis von 2:1 bis 0,7:1 gearbeitet. Als Polymerisationsinitiatoren dienen insbesondere die gebräuchlichen Persulfate, wie Kaliumpersulfat, es können jedoch auch Redox-Systeme zum Einsatz gelangen. Die Initiatoren werden im allgemeinen in Mengen von 0,1 bis 1 Gew.-%, bezogen auf die bei der Herstellung der Pfropfgrundlage A eingesetzten Monomeren, eingesetzt. Als weitere Polymerisationshilfsstoffe können die üblichen Puffersubstanzen, durch welche pH-Werte von vorzugsweise 6 bis 9 eingestellt werden - z.B. Natriumbicarbonat und Natriumpyrophosphate dienen; ferner können in der Regel 0,1 bis 3 Gew.-%, eines Molekulargewichtsreglers- wie Mercaptane, Terpinole oder dimeres alpha-Methylstyrol - bei der Polymerisation verwendet werden.

Die genauen Polymerisationsbedingungen, insbesondere Art, Dosierung und Menge des Emulgators, werden innerhalb der oben angegebenen Bereiche im einzelnen so gewählt, daß der erhaltene Latex des Polymerisates A einen d₅₀-Wert im Bereich von etwa 100 bis 750 nm, vorzugsweise im Bereich von 100 bis 600 nm, besitzt. Oder aber das Emulsionspolymerisat mit mittleren Teilchengrößen im Bereich von 60 bis 150 nm wird in bekannter Weise agglomeriert (vgl. DE-AS 24 27 960).

### Pfropfhülle B:

Zur Herstellung des Pfropfmischpolymerisates aus Kern und Pfropfhülle wird in Gegenwart des erhaltenen Latex A ein Monomerengemisch aus 40 bis 89,9 Gew.-% mindestens eines vinylaromatischen Monomeren B1, 10 bis 49,9 Gew.-% mindestens eines polaren, copolymerisierbaren Monomeren B2 und 0,1 bis 20 Gew.-% mindestens eines sauren Monomeren B3 polymerisiert. Beispiele für vinylaromatische Monomere sind Styrol, alpha-Methylstyrol und kernalkylierte Styrole wie p-Methylstyrol und tert.-Butylstyrol. Besonders bevorzugt werden Styrol, alpha-Methylstyrol und p-Methylstyrol eingesetzt. Beispiele für polare, copolymerisierbare, ethylenisch ungesättigte Monomere B2 sind Acrylnitril, Methacrylnitril, Acrylsäure- und Methacrylsäurealkylester mit 1 bis 4 Kohlenstoffatomen im Alkylrest. Bevorzugt werden Acrylnitril, Methylmethacrylat und Gemische derselben. Geeignete Monomere B3 sind mit B1 und B2 copolymerisierbare Monomere mit sauren Gruppen. Als saure Gruppen kommen insbesondere Carbonsäure- oder Sulfonsäuregruppen in Frage. Bevorzugte saure Monomere B3 sind α,β-ungesättigte Carbonsäuren wie Acrylsäure oder Methacrylsäure, ferner Citraconsäure, Crotonsäure, Fumarsäure, Itaconsäure, Maleinsäure, Vinylsulfonsäure, Vinylbenzolsulfonsäure, Vinylphosphorsäuren oder Zimtsäure.

Es ist vorteilhaft, die Pfropfmischpolymerisation auf das als Pfropfgrundlage A dienende Polymerisat wiederum in wäßriger Emulsion durchzuführen. Sie kann im gleichen System wie die Polymerisation der Pfropfgrundlage vorgenommen werde, wobei weiter Emulgator und Initiator zugegeben werden kann. Diese müssen mit den zur Herstellung der Pfropfgrundlage A verwendeten Emulgatoren bzw. Initiatoren nicht identisch sein. So kann z.B. zweckmäßig sein, als Initiator für die Herstellung der Pfropfgrundlage A ein Persulfat zu verwenden, zur Polymerisation der Pfropfhülle B jedoch ein Redoxinitiatorsystem einzusetzen. Im übrigen gilt für die Wahl von Emulgator, Initiator und Polymerisationshilfsstoffen das bei der Herstellung der Pfropfgrundlage A gesagte. Das auf> zupfropfende Monomerengemisch kann dem Reaktionsgemisch auf einmal, absatzweise in mehreren Stufen oder vorzugsweise kontinuierlich während der Polymerisation zugegeben werden. Die Pfropfmischpolymerisation wird so gesteuert, daß ein Pfropfgrad von 10 bis 60 Gew.-%, vorzugsweise von 15 bis 45 Gew.-%, resultiert.

Die erfindungsgemäßen teilchenförmigen Pfropfpolymerisate können für sich allein als Formmassen verwendet werden. Hierzu können sie z.B. durch Sprühtrocknung aufgearbeitet werden. Bevorzugt werden die teilchenförmigen Pfropfpolymerisate jedoch zur Abmischung mit einem Thermoplasten verwendet, um dessen Schlagzähigkeit zu erhöhen. Zur Modifizierung geeignete Thermoplaste haben Glasübergangstemperaturen über 25°C, bevorzugt über 60°C. Sie werden im folgenden auch als Hartkomponente (Matrix) bezeichnet. Beispiele für geeignete Hartkomponenten sind Polyvinylchlorid, Polymethylmethacrylat sowie insbesondere Copolymere aus einem vinylaromatischen Monomeren und einem polaren, copolymerisierbaren, ethylenisch ungesättigten Monomeren. Geeignete vinylaromatische sowie polare, copolymerisierbare, ethylenisch ungesättigte Monomere sind auch hier die bei der Herstellung der Pfropfhülle als B1 und B2 genannten. Besonders bevorzugte Hartkomponenten sind Styrol-Acrylnitril und a-Methylstyrol-Acrylnitril-Copolymere. Die Einarbeitung der erfindungsgemäßen teilchenförmigen Pfropfpolymerisate kann z.B. dadurch erfolgen, daß das teilchenförmige Pfropfpolymerisat durch Zugabe eines Elektrolyten aus der Emulsion isoliert wird und anschließend, gegebenenfalls nach Trocknung, durch gemeinsames Extrudieren, Kneten oder Walzen mit der Hartkomponente vermischt wird.

Die erfindungsgemäßen thermoplastischen Formmassen können als weitere Bestandteile Zusatzstoffe enthalten, wie sie für thermoplastische Formmassen üblich sind. Als solche seien beispielsweise genannt: Füllstoffe, weitere, verträgliche Kunststoffe, Antistatika, Antioxidantien, Flammschutzmittel, Schmiermittel, Farbstoffe und Pigmente. Die Zusatzstoffe werden in üblichen Mengen, vorzugsweise in Mengen von bis zu 30 Gew.-%, bezogen auf das Gesamtgewicht der thermoplastischen Formmassen, eingesetzt. Verträgliche Kunststoffe können auch einen höheren Anteil ausmachen.

Die erfindungsgemäßen Massen lassen sich nach den für die Thermoplastverarbeitung üblichen Verfahren, wie z.B. Extrusion und Spritzgießen, zu den verschiedenartigsten Formkörpern, wie z.B. Fensterprofilen, Gartenmöbeln, Booten, Schildern, Lampenabdeckungen, Automobilteilen und Kinderspielzeug verarbeiten. Die erfindungsgemäßen Massen eignen sich besonders zur Herstellung von Formkörpern, bei denen eine hohe Schlagzähigkeit gefordert ist.

Die in den Beispielen genannten Teile und Prozente beziehen sich, soweit nicht anders angegeben, auf das Gewicht.

### Beispiele

1. Herstellung der Pfropfgrundlage A
Die Herstellung der jeweiligen Pfropfgrundlage auf Acrylesterbasis (All, A12, A13) erfolgte nach folgender allgemeiner Vorschrift:
160 g des in Tabelle 1 zur Herstellung der Pfropfgrundlage A angegebenen Monomerengemische wurden in 1500 g Wasser unter Zusatz von 5 g des Natriumsalzes einer C₁₂- bis C₁₈-Paraffinsulfonsäure, 3 g Kaliumperoxodisulfat, 3 g Natriumhydrogencarbonat und 1,5 g Natriumpyrophosphat unter Rühren auf 60°C erwärmt. 10 Minuten nach dem Anspringen der Polymerisationsreaktion wurden innerhalb von 3 Stunden weitere 840 g der in Tabelle 1 angegebenen Mischung zugegeben. Nach Beendigung der Monomerzugabe wurde die Emulsion noch eine Stunde bei 60°C gehalten.
2. Herstellung der teilchenförmigen Pfropfpolymerisate (Pfropfhülle B)
2100 g der nach obiger Vorschrift (1) hergestellten Emulsion wurden mit 1150 g Wasser und 2,7 g Kaliumperoxodisulfat gemischt und unter Rühren auf 65°C erwärmt. Nach Erreichen der Reaktionstemperatur wurden im Lauf von 3 Stunden 560 g des in Tabelle 1 für die Herstellung der Pfropfhülle B angegebenen Monomerengemisches zudosiert. Nach Beendigung der Zugabe wurde die Emulsion noch 1 Stunden bei 65°C gehalten. Das Pfropfpolymerisat wurde mittels Calciumchloridlösung bei 95°C aus der Emulsion gefällt, mit Wasser gewaschen und im warmen Luftstrom getrocknet.
Für eine Pfropfgrundlage auf Dienbasis (A21, A22, A23) verfährt man z.B. wie folgt:
Durch die Polymerisation von 600 g Butadien in Gegenwart einer Lösung von 6 g tert.-Dodecylmercaptan, 6 g Dimethylaminoethylacrylat, 7 g C₁₄-Na-Alkylsulfonat als Emulgator, 2 g Kaliumperoxodisulfat und 2 g Natriumpyrophosphat in 800 ml Wasser wird bei 65°C ein Polybutadienlatex hergestellt. Der Umsatz beträgt 98 %. Es wird ein Latex erhalten, dessen mittlere Teilchengröße bei 100 nm liegt. Der erhaltene Latex wird durch Zusatz von 25 g einer Emulsion eines Copolymeren aus 96 Teilen Ethylacrylat und 4 Teilen Methacrylsäureamid mit einem Feststoffgehalt von 10 Gew.-% agglomeriert, wobei ein Polybutadienlatex mit einer mittleren Teilchengröße von 350 nm entsteht.
Nach Zusetzen von 400 g Wasser, 4 g Na-C₁₄-Alkylsulfonat und 2 g Kaliumperoxodisulfat werden 400 g einer Mischung aus Styrol und Acrylnitril sowie der sauren Komponente B3 in den in Tabelle 2 angegebenen Verhältnissen innerhalb von 4 Stunden zugeführt. Die Polymerisation erfolgt unter Rühren des Ansatzes bei 75°C. Der Umsatz, bezogen auf Styrol-Acrylnitril ist praktisch quantitativ. Die erhaltene Pfropfkautschukdispersion wird mittels Magnesiumsulfatlösung gefällt und das abgetrennte Pfropfmischpolymerisat mit destilliertem Wasser gewaschen und getrocknet.
3. Abmischung mit Hartkomponente
Zur Herstellung der Abmischungen wurde als Hartkomponente ein Styrol/Acrylnitril-Copolymerisat mit einem Acrylnitril-Gehalt von 35 % und einer Viskositätszahl von 80 ml/g verwendet. Das gefällte und getrocknete Pfropfmischpolymerisat aus (2) wurde auf einen Extruder bei 260°C so mit der Hartkomponente abgemischt, daß das resultierende Gemisch einen Pfropfpolymerisatanteil von 50 bzw. 46 % aufwies. Aus diesem Gemisch wurden durch Spritzguß Formteile hergestellt.

**Tabelle 1**

| Pfropfgrundlage A¹ | | | | Pfropfhülle B² | | | Kerbschlagzähigkeit | Glanz³ |
|---|---|---|---|---|---|---|---|---|
| | BA | DCPA | DMAEA | S | AN | MAS | [kJ/m²] | |
| 1 | 97 | 2 | 1 | 74 | 25 | 1 | 23 | 8 |
| 2 | 96 | 2 | 2 | 73 | 25 | 2 | 25 | 5 |
| 3⁴ | 98 | 2 | - | 75 | 25 | - | 10 | 72 |

| | | | | | | | | |
|---|---|---|---|---|---|---|---|---|
| ¹Zusammensetzung des zur Herstellung der Pfropfgrundlage A verwendeten Monomerengemisches | | | | | | | | |
| ²Zusammensetzung des zur Herstellung der Pfropfgrundlage B verwendeten Monomerengemisches | | | | | | | | |
| ³45° Glanz | | | | | | | | |
| ⁴Vergleichsversuch entsprechend dem Stand der Technik BA = Butylacrylat DCPA = Acrylsäureester des Tricyclodecenylalkohols DMAEA = Dimethylaminoethylacrylat S = Styrol AN = Acrylnitril MAS = Methacrylsäure | | | | | | | | |

**Tabelle 2**

| Pfropfgrundlage A¹ | | | Pfropfhülle B² | | | Kerbschlagzähigkeit | Glanz³ |
|---|---|---|---|---|---|---|---|
| | BU | DMAEA | S | AN | MAS | [kJ/m²] | |
| 1⁴ | 100 | - | 70 | 30 | - | 18 | 62 |
| 2 | 99 | 1 | 69 | 30 | 1 | 22 | 12 |
| 3 | 99 | 1 | 68 | 30 | 2 | 26 | 10 |

| | | | | | | | |
|---|---|---|---|---|---|---|---|
| ¹Zusammensetzung des zur Herstellung der Pfropfgrundlage A verwendeten Monomerengemisches | | | | | | | |
| ²Zusammensetzung des zur Herstellung der Pfropfgrundlage B verwendeten Monomerengemisches | | | | | | | |
| ³45° Glanz | | | | | | | |
| ⁴Vergleichsversuch entsprechend dem Stand der Technik BU = Butadien DMAEA = Dimethylaminoethylacrylat S = Styrol AN = Acrylnitril MAS = Methacrylsäure | | | | | | | |

## Patentansprüche

1. Teilchenförmiges Pfropfpolymerisat aus
A: einer Pfropfgrundlage A
auf der Grundlage eines Acrylatkautschuks A1 aus
A11: 75 bis 99,8 Gew.-% mindestens eines Alkylacrylats A11 mit 1 - 8 C-Atomen im Alkylrest
A12: 0,1 bis 5 Gew.-% mindestens eines polyfunktionellen, vernetzend wirkenden Monomeren A12
A13: 0,1 bis 20 Gew.-% mindestens eines eine oder mehrere basische Gruppen enthaltenden Monomeren A13
oder auf der Grundlage eines Dienkautschuks A2 aus
A21 mindestens 50 Gew.-% eines oder mehrerer Diene A21
A22: bis zu 50 Gew.-% mindestens eines copolymerisierbaren ethylenisch ungesättigten Monomeren A22
A23: 0,1 bis 15 Gew.-% mindestens eines eine oder mehrere basische Gruppen enthaltenden Monomeren A23
und
B: einer Pfropfhülle B aus
B1: 40 bis 89,9 Gew.-% mindestens eines vinylaromatischen Monomeren B1
B2: 10 bis 49,9 Gew.-% mindestens eines polaren, copolymerisierbaren, ethylenisch ungesättigten Monomeren B2
B3: 0,1 bis 20 Gew.-% mindestens eines eine oder mehrere saure Gruppen enthaltenden Monomeren B3.

2. Formmasse nach Anspruch 1 aus im wesentlichen 1 bis 50 Gew.-% eines teilchenförmigen Pfropfpolymerisats nach Anspruch 1 und 50 bis 99 Gew.-% mindestens eines Polymeren mit einer Glasübergangstemperatur von mehr als 25°C als Matrix sowie untergeordneten Mengen an üblichen Zusatz- und Hilfsstoffen.

## Claims

1. A particulate graft polymer of
A: a grafting base A based on an acrylate rubber Al consisting of
A11: from 75 to 99.8% by weight of at least one alkyl acrylate All where the alkyl radical is of 1 to 8 carbon atoms
A12: from 0.1 to 5% by weight of at least one polyfunctional crosslinking monomer A12
A13: from 0.1 to 20% by weight of at least one monomer A13 containing one or more basic groups
or based on a diene rubber A2 consisting of
A21: at least 50% by weight of one or more dienes A21
A22: up to 50% by weight of at least one copolymerizable ethylenically unsaturated monomer A22
A23: from 0.1 to 15% by weight of at least one monomer A23 containing one or more basic groups
and
B: a graft B of
B1: from 40 to 89.9% by weight of at least one vinylaromatic monomer B1
B2: from 10 to 49.9% by weight of at least one polar copolymerizable ethylenically unsaturated monomer B2
B3: from 0.1 to 20% by weight of at least one monomer B3 containing one or more acidic groups.

2. A molding material as claimed in claim 1, consisting essentially of from 1 to 50% by weight of a particulate graft polymer as claimed in claim 1 and from 50 to 99% by weight of at least one polymer having a glass transition temperature of more than 25°C as a matrix and minor amounts of conventional additives and assistants.

## Revendications

1. Polymère de greffage particulaire, constitué de
A: une base de greffage A à base d'un caoutchouc d'acrylate A1 formé de
A11: 75 à 99,8% en poids d'au moins un acrylate d'alkyle A11 comportant de 1 à 8 atomes de carbone dans le reste alkyle,
A12: 0,1 à 5% en poids d'au moins un monomère A12 à activité réticulante, polyfonctionnel,
A13: 0,1 à 20% en poids d'au moins un monomère A13 contenant un ou plusieurs radicaux basiques,
ou à base d'un caoutchouc de diène A2, formé de
A21: au moins 50% en poids d'un ou plusieurs diènes A21,
A22: jusqu'à 50% en poids d'au moins un monomère A22 éthyléniquement insaturé et copolymérisable,
A23: 0,1 à 15% en poids d'au moins un monomère A23 contenant un ou plusieurs radicaux basiques
et
B: une gaine ou enveloppe de greffage B, constituée de
B1: 40 à 89,9% en poids d'au moins un monomère vinylaromatique B1,
B2: 10 à 49,9% en poids d'au moins un monomère B2 éthyléniquement insaturé, copolymérisable et polaire,
B3: 0,1 à 20% en poids d'au moins un monomère B3 contenant un ou plusieurs radicaux acides.

2. Masse à mouler suivant la revendication 1, constituée essentiellement de 1 à 50% en poids d'un polymère de greffage particulaire suivant la revendication 1 et de 50 à 99% en poids d'au moins un polymère possédant une température de transition vitreuse supérieure à 25°C, servant de matrice, ainsi que des proportions inférieures d'additifs et d'auxiliaires usuels.
